# EUROPEAN PATENT APPLICATION

(11) **EP 1 826 859 A1**
(43) Date of publication of application: **29.08.2007**
(21) Application number: 07001724.9
(22) Date of filing: 26.01.2007
(51) Int. Cl.: H01M 8/24, H01M 8/00, H01M 8/06, F24D 15/00, F24D 17/00

(54) **System for supplying energy to a plurality of building units**

(30) Priority: 22.02.2006 KR 20060017397; 31.03.2006 KR 20060029922
(71) Applicant: LG Electronics Inc., Seoul 150-721 (KR)
(72) Inventor: Ha, Sam-Chul, Changwon Gyeongsangnam-Do (KR); Ryoo, Sung-Nam, Daejeon (KR); Park, Myung-Seok, Gwangmyeong Gyeonggi-Do (KR); Hwang, Yong-Jun, Mapo-Gu Seoul (KR)
(74) Representative: TER MEER - STEINMEISTER & PARTNER GbR

(57) **Abstract**

A system for supplying energy to a plurality of building units includes a plurality of fuel cells installed in a plurality of building units, a common reformer which generates hydrogen from fuel, a pipe system which supplies hydrogen generated by the common reformer to each of the plurality of fuel cells, and a plurality of converters which convert electricity generated by the plurality of fuel cells into electricity which is supplied to each of the plurality of building units.

## Description

### BACKGROUND OF THE INVENTION

### 1. Field of the Invention

The present invention relates to a system for supplying energy to a plurality of building units, and more particularly, to a system which supplies both electrical energy and heat energy to a plurality of building units using fuel cells, with minimal size and high efficiency.

### 2. Description of the Background Art

Oil, when used as an energy source, pollutes the environment. As industry develops and the number of automobiles on the roads continues to increase, the demand for oil is drastically increasing, which results in the price of oil being high. Since the amount of oil on the planet is limited, a lot of research is being performed to find a replacement for oil as an energy source. Fuel cell technology is one of the areas of research.

A fuel cell converts chemical energy into electric energy by electrochemically reacting a fuel containing, for example, hydrogen with oxygen, and then converting energy generated by the reaction into electric energy. Heat and water are generated as byproducts of the reaction.

Types of fuel cells include, but are not limited to a Phosphoric Acid Fuel Cell (PAFC), an Alkaline Fuel Cell (AFC), a Proton Exchange Membrane Fuel cell (PEMFC), a Molten Carbonate Fuel Cell (MCFC), a Solid Oxide Fuel Cell (SOFC), and a Direct Methanol Fuel Cell (DMFC).

Applications of fuel cells include, but are not limited to, supplying electricity to homes, electric vehicles, or portable electronic devices, such as, for example, portable terminals or notebooks.

A fuel cell provided in a home can be used to supply electric energy to electric appliances, lighting devices, and other electronic devices, for example. Electricity generated from a fuel cell can supplement, or be supplemented with, electricity generated from a power plant.

Generally, it takes a certain time for the fuel cell system to be normally operated after being stopped. Accordingly, when a duration for which electricity is not used at home is increased, a driving efficiency of the fuel cell system is degraded. The home fuel cell system has to be minimized. If the size of the home fuel cell system is large, an installation space for the fuel cell system is increased thus reducing the living space available to family members.

### SUMMARY OF THE INVENTION

A feature of the present invention is a system for supplying energy to a plurality of building units using fuel cells, with minimal size and high efficiency.

To achieve at least this feature, there is provided a system for supplying energy to a plurality of building units which includes a plurality of fuel cells installed in a plurality of building units, a common reformer which generates hydrogen from fuel, a pipe system which supplies hydrogen generated by the common reformer to each of the plurality of fuel cells, and a plurality of converters which convert electricity generated by the plurality of fuel cells into electricity which is supplied to each of the plurality of building units.

The system may include a pressure swing absorber (PSA) which enhances a purity of hydrogen generated by the common reformer. The system may also include a hydrogen storage tank which stores hydrogen refined by the PSA.

The pipe system may include a main pipe connected to the common reformer, and divergence pipes connected to the main pipe and the plurality of fuel cells. The pipe system may also include a plurality of controlling units which control an amount of hydrogen supplied to each of the fuel cells.

An external power supply line which supplies external power from a power plant may connect to each of the converters. Each of the building units may be a home. The plurality of homes may be apartments in a single apartment building.

There is also provided a system for supplying energy to a plurality of building units which includes a plurality of fuel cells installed in a plurality of building units, a common reformer which generates hydrogen from fuel, a pipe system which supplies hydrogen generated by the common reformer to each of the plurality of fuel cells, a plurality of hot water storage tanks, installed in the plurality of building units, which supply hot water to the plurality of building units, the plurality of fuel cells heating water stored in the plurality of hot water storage tanks, and a plurality of converters installed in the plurality of building units, which convert electricity generated by the plurality of fuel cells into electricity which is supplied to the plurality of building units.

The system may also include a pressure swing absorber (PSA) which enhances a purity of hydrogen generated by the common reformer. The system may also include a hydrogen storage tank which stores hydrogen refined by the PSA. The PSA may enhance the purity of the hydrogen to more than 95% purity.

The pipe system may include a main pipe connected to the common reformer, and divergence pipes connected to the main pipe and the plurality of fuel cells. The pipe system may also include a plurality of controlling units which control an amount of hydrogen supplied to each of the plurality of fuel cells.

An external power supply line which supplies external power from a power plant may connect to each of the converters. The system may include a plurality of supplementary heating units which rapidly heat water stored in the hot water storage tanks. The supplementary heating units may each include a catalyst burner which generate heat by combusting hydrogen.

There is also provided a system for supplying energy to a plurality of building units which includes a plurality of fuel cells installed in a plurality of building units, a common reformer, connected to a gas supply pipe which supplies gas to each of the plurality of building units, which generates hydrogen from gas from the gas supply pipe, a pipe system which supplies hydrogen generated by the common reformer to each of the plurality of fuel cells, a plurality of hot water storage tanks, installed in the plurality of building units, which supply hot water to the plurality of building units, the plurality of fuel cells heating water stored in the plurality of hot water storage tanks, a plurality of supplementary heating units which heat the water stored in the plurality of hot water storage tanks using gas from the gas supply pipe or hydrogen remaining at a fuel cell after a reaction, and a plurality of converters installed in the plurality of building units, which convert electricity generated by the plurality of fuel cells into electricity which is supplied to the plurality of building units.

Gas supplied to the gas supply pipe may be liquefied natural gas (LNG). The supplementary heating unit may be a catalyst burner which combusts LNG and hydrogen.

The system may include a connection pipe which supplies hydrogen remaining at a fuel cell after a reaction from a fuel cell to a supplementary heating unit, a gas connection pipe which supplies gas from the gas supply pipe to a supplementary heating unit, a first flow amount controlling valve mounted on the connection pipe, and a second flow amount controlling valve mounted on the gas connection pipe. An external power supply line which supplies external power from a power plant may connect to each of the converters.

The system may include a pressure swing absorber (PSA) which enhances a purity of hydrogen generated by the common reformer. The system may also include a hydrogen storage tank, connected to the pipe system, which stores hydrogen refined by the PSA .

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a pipe diagram showing a multi-home energy supplying system using a fuel cell according to a first embodiment of the present invention;
FIG. 2 is a pipe diagram showing a fuel cell system of the multi-home energy supplying system using a fuel cell according to a first embodiment of the present invention;
FIG. 3 is a pipe diagram showing a fuel cell system of the multi-home energy supplying system using a fuel cell according to a second embodiment of the present invention;
FIG. 4 is a pipe diagram showing a fuel cell system of the multi-home energy supplying system using a fuel cell according to a third embodiment of the present invention;
FIGS. 5 and 6 are pipe diagrams showing an operation of the multi-home energy supplying system using a fuel cell according to a third embodiment of the present invention; and
FIG. 7 is a pipe diagram showing a multi-home energy supplying system using a fuel cell according to a fourth embodiment of the present invention.

### DETAILED DESCRIPTION OF THE INVENTION

Reference will now be made in detail to the preferred embodiments of the present invention, examples of which are illustrated in the accompanying drawings.

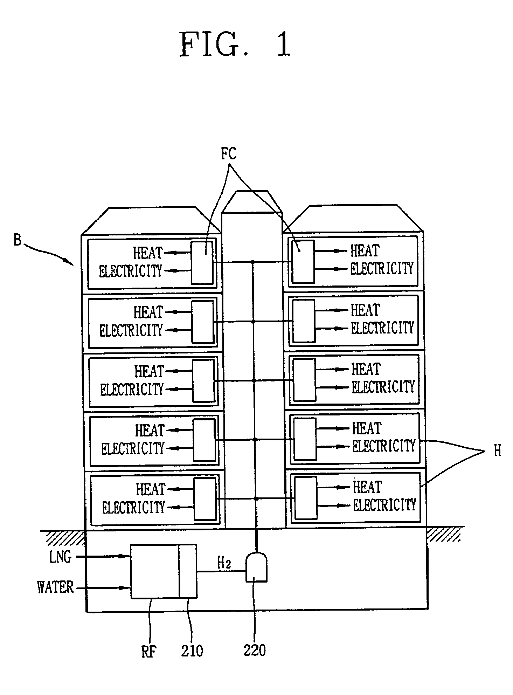

Hereinafter, a system for supplying energy to a plurality of building units according to the present invention will be explained in more detail with reference to FIG. 1.

FIG. 1 is a pipe diagram showing a system for supplying energy to a plurality of building units according to a first embodiment of the present invention.

A fuel cell (FC) is installed at a plurality of building units. Each building unit may be, for example, an apartment home of an apartment building, a house in a subdivision, an office in an office building, etc. Although the invention is not limited to use in an apartment building, the invention is described below in the context of its use in an apartment building, merely for the sake of example.

More concretely, a fuel cell FC is installed at each apartment home H of an apartment building B. Preferably, the FC is installed at a veranda or a boiler room of each home H.

A common reformer RF for generating hydrogen and supplying the hydrogen to the FC of each home H of the apartment building B is installed at the apartment building B. Preferably, the common reformer is installed at a basement, etc. of the apartment building B.

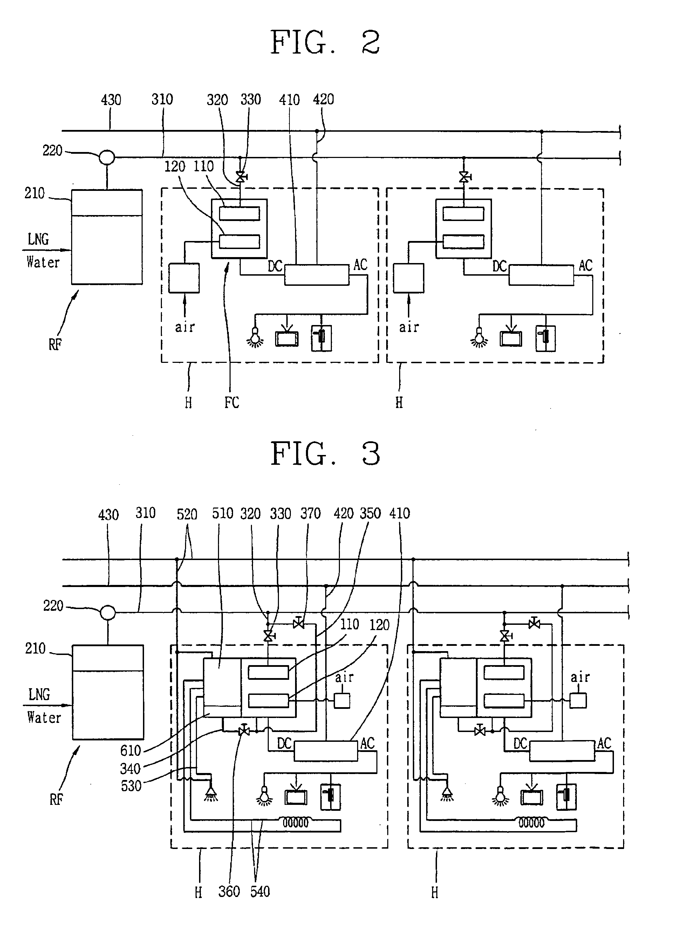

FIG. 2 is a pipe diagram showing a fuel cell system of the multi-home energy supplying system using a fuel cell according to a first embodiment of the present invention. As shown in FIG. 2, the fuel cell system consists of a plurality of fuel cells FC, and one common reformer RF connected to the fuel cells.

The FC includes an anode 110 to which hydrogen is supplied, and a cathode 120 to which air is supplied. As hydrogen supplied to the anode 110 and oxygen supplied to the cathode 120 electrochemically react with each other, electric energy is generated. The anode 110 and the cathode 120 are implemented as a stack. The stack is formed accordingly as a plurality of unitary stacks are laminated to each other, the unitary stack including two bi-polar plates and a membrane electrode assembly (MEA) positioned between the two bi-polar plates.

The common reformer generates hydrogen by receiving a fuel. The fuel is a hydrocarbon-based fuel such as, for example, liquefied natural gas (LNG), liquefied petroleum gas (LPG), methanol (CH30H), etc. The common reformer RF refines hydrogen through a desulfurizing process, a reforming process, and a hydrogen refining process.

Preferably, a pressure swing absorber (PSA) 210 which enhances a purity of hydrogen is provided at the common reformer. The PSA 210 enhances hydrogen refined by the common reformer, since the hydrogen generally has a low purity.

A hydrogen storage tank 220 for storing hydrogen generated from the common reformer RF is connected to the PSA 210. A pipe system for supplying hydrogen generated from the common reformer to the FC installed at each home H is provided. The pipe system comprises a main pipe 310 connected to the common reformer, and divergence pipes 320 respectively connected to the main pipe 310 and the FC installed at each home H. The divergence pipe 320 is connected to the anode 110 of the FC.

Preferably, the hydrogen storage tank 220 is connected to the main pipe 310.

The pipe system further comprises a controlling unit 330 which controls an amount of hydrogen supplied to the FC of each home H. The controlling unit 330 may be implemented, for example, by a flow amount controlling valve mounted at the divergence pipe 320.

A converting unit 410 serves to convert a DC energy generated from the FC installed at each home H of the apartment building B into a commercial power (e.g., AC power that is supplied) to each home H. The electricity converted by the converting unit 410 is supplied to a television, a refrigerator, an air conditioner, etc. of the home H.

An external power supply line 420 for supplying external power from a power plant is connected to the converting unit 410. When electricity supplied from the FC of the home H is unstable, external power is supplied to the home through the external power supply line 420 thus to stably supply electricity to the home H at all times.

A main external power supply line 430 also supplies external power to each home H.

FIG. 3 is a pipe diagram showing a fuel cell system of the multi-home energy supplying system using a fuel cell according to a second embodiment of the present invention.

As shown, a fuel cell FC is installed at each home H of an apartment building B.

Preferably, the FC is installed at a boiler room, etc. of each home H.

A common reformer RF for generating hydrogen thus supplying the hydrogen to the FC of each home H of the apartment building B is installed at the apartment building B. Preferably, the common reformer is installed at a basement, etc. of the apartment building B.

The fuel cell system consists of a plurality of fuel cells FC, and one common reformer RF connected to the fuel cells.

The FC includes an anode 110 to which hydrogen is supplied, and a cathode 120 to which air is supplied. As hydrogen supplied to the anode 110 and oxygen supplied to the cathode 120 electrochemically react with each other, electric energy is generated. The anode 110 and the cathode 120 are implemented as a stack. The stack is formed accordingly as a plurality of unitary stacks are laminated to each other, the unitary stack including two bi-polar plates and an MEA positioned between the two bi-polar plates.

The common reformer generates hydrogen by receiving a fuel. The fuel is a hydrocarbon-based fuel such as LNG, LPG, CH3OH, etc., and the common reformer refines hydrogen through a desulfurizing process, a reforming process, and a hydrogen refining process.

Preferably, a pressure swing absorption (PSA) 210 for enhancing a purity of hydrogen is provided at the common reformer. Since hydrogen refined by the common reformer generally has a low purity, the PSA 210 need to be provided at the common reformer. Preferably, hydrogen having undergone the PSA 210 has a purity more than 95%.

A hydrogen storage tank 220 for storing hydrogen generated from the common reformer RF is connected to the PSA 210.

A pipe system for supplying hydrogen generated from the common reformer to the FC installed at each home H is provided. The pipe system comprises a main pipe 310 connected to the common reformer, and divergence pipes 320 respectively connected to the main pipe 310 and the FC installed at each home H. The divergence pipe 320 is connected to the anode 110 of the FC.

In the illustrated embodiment, the hydrogen storage tank 220 is connected to the main pipe 310. However, this arrangement can be modified without departing from the spirit and/or scope of the invention.

The pipe system further comprises a controlling unit 330 for controlling an amount of hydrogen supplied to the FC of each home H. The controlling unit 330 consists of flow amount controlling valves mounted at the divergence pipes 320.

A converting unit 410 serves to convert electric energy generated from the FC installed at each home H of the apartment building B into a commercial power thus to supply it to each home H. The electricity converted by the converting unit 410 is supplied to a television, a refrigerator, an air conditioner, etc. of the home H.

An external power supply line 420 for supplying external power from a power plant is connected to the converting unit 410. When electricity supplied from the FC of the home H is unstable, external power is supplied to the home through the external power supply line 420 to stably supply electricity to the home H at all times.

A hot water storage tank 510 for storing heat generated from the FC of each home H of the apartment building B thus supplying hot water to the home H is provided. The hot water storage tank 510 is connected to an external water supply pipe 520 for supplying water from outside. A hot water supply pipe 530 connected to the hot water storage tank 510 supplies hot water to each home H. A hot water supply pipe 540 for heating an indoor floor is connected to the hot water storage tank 510.

The hot water storage tank 510 is provided with a supplementary heating unit 610 to rapidly heat water stored therein. Preferably, the supplementary heating unit 610 is a catalyst burner for combusting LNG or hydrogen. The catalyst burner is connected to the FC by a first connection pipe 340, and is provided with hydrogen remaining at the FC after a reaction through the first connection pipe 340. The first connection pipe 340 is connected to the divergence pipe 320 by a second connection pipe 350. The second connection pipe 350 is connected to the divergence pipe 320 so that one side thereof can be positioned between a connection part and the flow amount control valve of the controlling unit 330 mounted at the divergence pipe 320, the connection part between the main pipe 310 and the divergence pipe 320. A first switching valve 360 is mounted at the first connection pipe 340, and a second switching valve 370 is mounted at the second connection pipe 350.

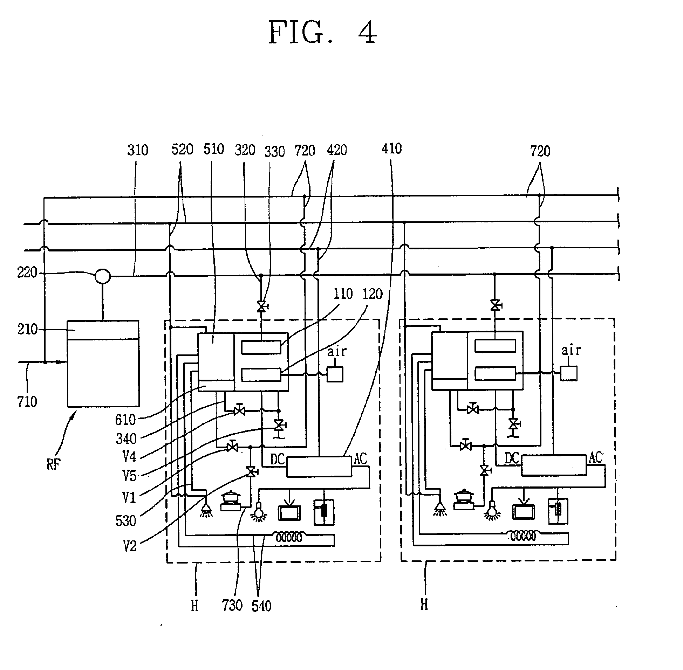

FIG. 4 is a pipe diagram showing a fuel cell system of a multi-home energy supplying system using a fuel cell according to a third embodiment of the present invention.

A fuel cell FC is installed at each home H of an apartment building B, Preferably, the FC is installed at a veranda or a boiler room of each home H of the apartment building B.

A common reformer RF for generating hydrogen thus supplying the hydrogen to the FC of each home H of the apartment building B is installed at the apartment building B. Preferably, the common reformer is installed at a basement, etc. of the apartment building B.

A gas supply pipe 710 for supplying gas to the apartment building B is connected to the common reformer. The gas may be LNG or liquefied hydrogen, for example. Hereinafter, details will be explained in an assumption that liquefied hydrogen is supplied to the gas supply pipe 710.

Preferably, a pressure swing absorption (PSA) 210 for enhancing a purity of hydrogen is provided at the common reformer. Since hydrogen refined by the common reformer generally has a low purity, the PSA 210 need to be provided at the common reformer. Preferably, hydrogen having undergone the PSA 210 has a purity more than 95%.

A hydrogen storage tank 220 for storing hydrogen generated from the common reformer RF is connected to the PSA 210.

A hot water storage tank 510 for storing heat generated from the FC of each home H of the apartment building B thus supplying hot water to the home H is provided. The hot water storage tank 510 is connected to an external water supply pipe 520 for supplying water from outside.

The hot water storage tank 510 is provided with a supplementary heating unit 610 for rapidly heating water stored therein. Preferably, the supplementary heating unit 610 is a catalyst burner which combusts hydrogen and a hydrocarbon-based fuel such as LNG or LPG.

Provided is a pipe system for supplying hydrogen generated from the common reformer to the FC installed at each home H.

The pipe system comprises a main pipe 310 connected to the common reformer, and divergence pipes 320 respectively connected to the main pipe 310 and the FC installed at each home H.

Preferably, the hydrogen storage tank 220 is connected to the main pipe 310.

The pipe system further comprises a controlling unit 330 for controlling an amount of hydrogen supplied to the FC of each home H. The controlling unit 330 consists of flow amount controlling valves mounted at the divergence pipes 320 of the pipe system.

The supplementary heating unit 610 of each home H and the gas supply pipe 710 are connected to each other by a gas connection pipe 720, thereby supplying LNG supplied to the gas supply pipe 710 to the supplementary heating unit 610. A flow amount controlling valve V1 for controlling a flow amount is provided at the gas connection pipe 720 connected to the supplementary heating unit 610. A gas divergence pipe 730 is connected to the gas connection pipe 720, and is connected to a cooking device provided at each home. A flow amount controlling valve V5 for controlling a flow amount is provided at the gas connection pipe 720, and a flow amount controlling valve V2 for controlling a flow amount is provided at the gas divergence pipe 730.

The fuel cell system consists of a plurality of fuel cells (FC), and one common reformer RF connected to the fuel cells.

The FC includes an anode 110 to which hydrogen is supplied, and a cathode 120 to which air is supplied. As hydrogen supplied to the anode 110 and oxygen supplied to the cathode 120 electrochemically react with each other, electric energy is generated. The anode 110 and the cathode 120 are implemented as a stack. The stack is formed accordingly as a plurality of unitary stacks are laminated to each other, the unitary stack including two bi-polar plates and an MEA positioned between the two bi-polar plates.

The anode 110 of the fuel cell is connected to the divergence pipe 320 thus to be supplied with hydrogen, and the cathode 120 thereof is supplied with air.

The common reformer generates hydrogen by receiving a fuel. The fuel is a hydrocarbon-based fuel such as LNG, LPG, CH30H, etc., and the common reformer refines hydrogen through a desulfurizing process, a reforming process, and a hydrogen refining process.

Hydrogen remaining at the fuel cell after a reaction is supplied to the supplementary heating unit 610 through a first connection pipe 340. A flow amount controlling valve V4 is mounted at the first connection pipe 340.

A converting unit 410 serves to convert electric energy generated from the fuel cell FC installed at each home H of the apartment building B into a commercial power, and thus to supply it to each home H. The electricity converted by the converting unit 410 is supplied to a lighting device, a television, a refrigerator, an air conditioner, etc. of the home H.

An external power supply line 420 for supplying external power from a power plant is connected to the converting unit 410. When electricity supplied from the fuel cell FC of each home H is unstable, external power is supplied to each home H through the external power supply line 420 thus to stably supply electricity to the home H at all times.

A hot water supply pipe 530 for supplying hot water to each home H is connected to the hot water storage tank 510. A hot water supply pipe 540 for heating an indoor floor is connected to the hot water storage tank 510.

Hereinafter, an operation of a fuel cell system of a multi-home energy supplying system using a fuel cell according to the present invention will be explained.

A fuel is supplied to the common reformer thus to generate hydrogen therein. Then, the hydrogen generated in the common reformer passes through a pressure swing absorption PSA 210 thus to have a high purity. Then, the hydrogen refined by the PSA is temporarily stored in a hydrogen storage tank 220. Then, the hydrogen stored in the hydrogen storage tank 220 is supplied to a fuel cell FC installed at each home H via a main pipe 310 of a pipe system and a divergence pipe 320 connected to each home H, sequentially.

The hydrogen supplied to the fuel cell FC of each home H is supplied to an anode 110 of the FC, and air is supplied to a cathode 120 through an air supply unit. As hydrogen supplied to the anode 110 and oxygen supplied to the cathode 120 electrochemically react with each other, electric energy is generated. Herein, reaction heat and water are generated as byproducts.

The electric energy generated from the fuel cell FC is supplied to a lighting device, a television, a refrigerator, an air conditioner, etc. of the home H through a converting unit 410. An external power supply line 420 for supplying external power from a power plant is connected to the converting unit 410. When electricity supplied from the fuel cell FC of each home H is unstable, external power is supplied to each home through the external power supply line 420 thus to stably supply electricity to the home H at all times.

Heat energy generated from the fuel cell FC heats water stored in a hot water storage tank 510 installed at each home H.

Hot water stored in the hot water storage tank 510 not only is supplied to each home H, but also heats an indoor room of each home H. Hot water used in each home H can be temperature-controlled by being mixed with water supplied from outside. The indoor room is heated by a hot water supply pipe 540 for heating, and a heating temperature can be controlled by a controller (not shown).

When water stored in the hot water storage tank 510 is to be rapidly heated or water of a high temperature is required, a supplementary heating unit 610 is operated.

The operation of the supplementary heating unit 610 according to the second embodiment of the present invention will be explained.

When the supplementary heating unit 610 implemented as a catalyst burner is to be operated, a first switching valve 360 is opened and a second switching valve 370 is closed. Accordingly, hydrogen remaining at the fuel cell FC after a reaction is supplied to the supplementary heating unit 610. Then, the supplementary heating unit 610 rapidly heats the water stored in the hot water storage tank 510. On the contrary, when the supplementary heating unit 610 is not to be operated, the first switching valve 360 is closed and the second switching valve 370 is opened. Accordingly, hydrogen remaining at the fuel cell FC after a reaction is recollected thus to be supplied to another fuel cell FC being operated in another home H.

Even when the fuel cell FC is not operated, the supplementary heating unit 610 can be operated. Herein, hydrogen supplied to the divergence pipe 320 can be directly introduced into the supplementary heating unit 610 through the fuel cell FC or a second connection pipe 350. The fuel cell FC does not use hydrogen when a load is not applied thereto.

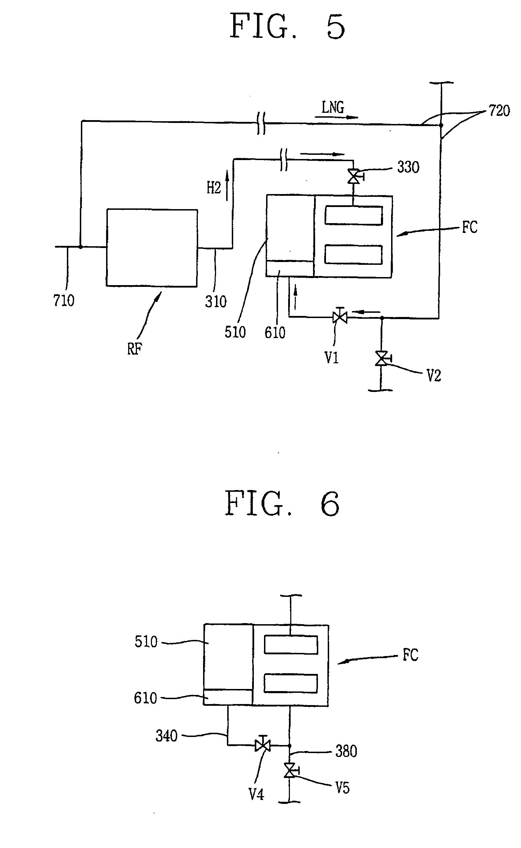

Referring to FIG. 5, the supplementary heating unit 610 according to the third embodiment will be explained. LNG is supplied to the supplementary heating unit 610 through a gas connection pipe 720. Then, the gas is combusted in the supplementary heating unit 610 thus to heat water stored in the hot water storage tank 510. Hydrogen remaining at the fuel cell FC after a reaction can be supplied to the supplementary heating unit 610 thus to be combusted therein, thereby heating water stored in the hot water storage tank 510. As shown in FIG. 6, hydrogen remaining at the fuel cell FC after a reaction is not supplied to the supplementary heating unit 610 through a connection pipe 340 between the fuel cell FC and the supplementary heating unit 610, but is supplied to the fuel cell FC through another connection pipe 380 connected to the fuel cell FC or is supplied to a fuel cell FC installed at another home.

LNG supplied to the gas connection pipe 720 is supplied to a cooking device through a gas divergence pipe 730.

In the present invention, the fuel cell FC is installed at each home H of the apartment building B, and the common reformer RF for supplying hydrogen to the fuel cell FC is additionally installed at a basement of the apartment building B. Accordingly, an installation space for the fuel cell FC inside each home H of the apartment building B is minimized. If the fuel cell FC and the common reformer are installed at each home H of the apartment building B, an installation space for the fuel cell FC and the common reformer is increased thus to decrease a living space inside each home H. Generally, the fuel cell and the common reformer occupy a largest space in a fuel cell system. The common reformer occupies approximately 2/5 of the entire size of the fuel cell system. In the present invention, since a reformer installed at each home H of the apartment building B is substituted by one common reformer, a space inside each home H is maximized.

Furthermore, in the present invention, the fuel cell FC is installed at each home H of the apartment building B, and one common reformer for supplying hydrogen to each fuel cell FC is implemented thus to have a compactized entire system. Accordingly, a fabrication cost and an installation cost are reduced, and the system can be easily maintained.

Besides, in the present invention, since the fuel cell FC is installed at each home H of the apartment building B and one common reformer for supplying hydrogen to each fuel cell FC is implemented, an efficiency of the fuel cell system is enhanced.

Generally, a fuel cell system consists of one fuel cell and one reformer for supplying hydrogen to the fuel cell FC. When a load is not applied to the fuel cell FC, the fuel cell system is not operated. On the contrary, when a load is applied to the fuel cell FC, the fuel cell system is operated. Since it takes a lot of time for the fuel cell system to be normally re-operated after being stopped, when the number of times that the fuel cell system is stopped and then is re-operated is increased, the efficiency of the fuel cell system is lowered.

However, in the present invention, since the fuel cell FC is installed at each home H of the apartment building B and one common reformer for supplying hydrogen to each fuel cell FC is implemented, electricity can be always supplied to each home H. Accordingly, a load is always applied to the fuel cell FC and thus the fuel cell system is rarely stopped, thereby enhancing the efficiency of the fuel cell system.

According to the second embodiment of the present invention, hydrogen generated from the common reformer has a high purity. Hydrogen remaining at the fuel cell FC after a reaction is recollected thus to be supplied to another fuel cell FC requiring hydrogen, or is supplied to the supplementary heating unit thus to heat water stored in the hot water storage tank 510. Accordingly, a usage efficiency for hydrogen is maximized.

According to the third embodiment of the present invention, in summer when electric energy is much used and heat energy is less used, the fuel cell FC is operated and the supplementary heating unit 610 is stopped, thereby sufficiently supplying electric energy to each home. On the contrary, in winter when electric energy is less used and heat energy is much used, both the fuel cell FC and the supplementary heating unit 610 are operated, thereby sufficiently supplying heat energy to each home. Accordingly, in summer and winter, the fuel cell FC can be stably operated, and electric energy and heat energy can be stably supplied to each home.

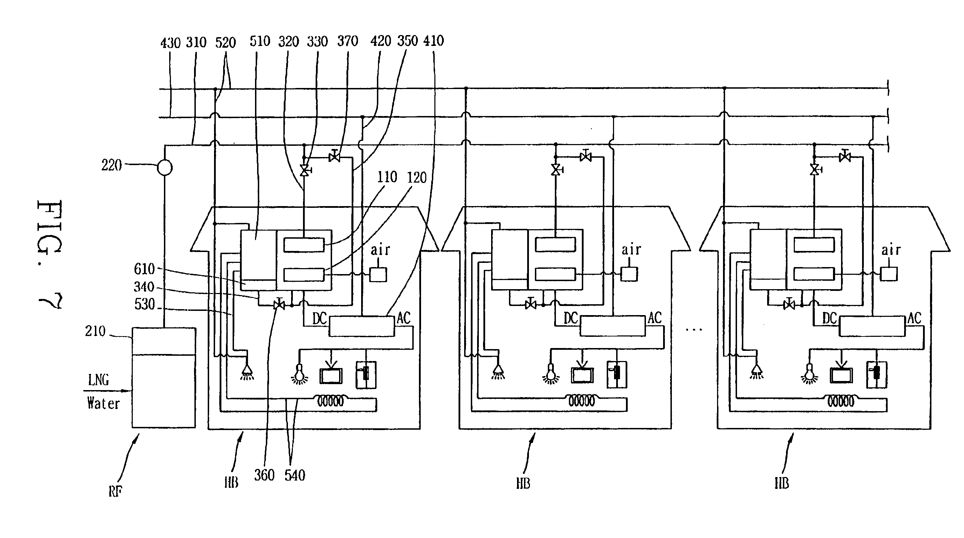

According to the fourth embodiment of the present invention, as shown in FIG. 7, the fuel cell FC is applied to a multi-home (HB) of a certain area not an apartment building. That is, the fuel cell FC is installed at each home inside the HB of a certain area, and a common reformer is installed at the area. By connecting the common reformer with each home by a pipe system, hydrogen generated from the common reformer is supplied to the fuel cell FC installed at each home. A hot water storage tank 510 for storing heat energy supplied from the fuel cell FC is provided, and water stored therein is used as hot water or for heating. The fuel cell FC, the common reformer, the hot water storage tank 510, and the pipe system have the same construction and effect as those of the aforementioned ones.

As aforementioned, in the multi-home energy supplying system using a fuel cell according to the present invention, electric energy and heat energy are supplied to each home by using a fuel cell, an installation space for the system is minimized in each home, an installation cost is reduced, and the system is easily maintained. Accordingly, a usage amount for oil is decreased thus to decrease environment pollution, and competitiveness for the entire system is enhanced.

Furthermore, since a usage efficiency for hydrogen is enhanced and a driving efficiency for the fuel cell system is enhanced, an amount of a fuel to be supplied to the fuel cell system is decreased.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalents of such metes and bounds are therefore intended to be embraced by the appended claims.

## Claims

1. A system for supplying energy to a plurality of building units, comprising:
a plurality of fuel cells installed in a plurality of building units;
a common reformer which generates hydrogen from fuel;
a pipe system which supplies hydrogen generated by the common reformer to each of the plurality of fuel cells; and
a plurality of converters which convert electricity generated by the plurality of fuel cells into electricity which is supplied to each of the plurality of building units.

2. The system according to claim 1, further comprising a pressure swing absorber (PSA) which enhances a purity of hydrogen generated by the common reformer.

3. The system according to claim 2, further comprising a hydrogen storage tank which stores hydrogen refined by the PSA.

4. The system according to claim 1, wherein the pipe system comprises:
a main pipe connected to the common reformer; and
divergence pipes connected to the main pipe and the plurality of fuel cells.

5. The system according to claim 1, wherein the pipe system further comprises a plurality of controlling units which control an amount of hydrogen supplied to each fuel cell of the plurality of fuel cells.

6. The system according to claim 1, wherein an external power supply line which supplies external power from a power plant connects to each of the converters.

7. The system according to claim 1, wherein each of the building units is a home.

8. The system of claim 7, wherein the plurality of homes are apartments in a single apartment building.

9. A system for supplying energy to a plurality of building units, comprising:
a plurality of fuel cells installed in a plurality of building units;
a common reformer which generates hydrogen from fuel;
a pipe system which supplies hydrogen generated by the common reformer to each of the plurality of fuel cells;
a plurality of hot water storage tanks, installed in the plurality of building units, which supply hot water to the plurality of building units, the plurality of fuel cells heating water stored in the plurality of hot water storage tanks; and
a plurality of converters installed in the plurality of building units, which convert electricity generated by the plurality of fuel cells into electricity which is supplied to the plurality of building units.

10. The system according to claim 9, further comprising a pressure swing absorber (PSA) which enhances a purity of hydrogen generated by the common reformer.

11. The system according to claim 10, further comprising a hydrogen storage tank which stores hydrogen refined by the PSA.

12. The system according to claim 10, wherein the PSA enhances the purity of the hydrogen to more than 95% purity.

13. The system according to claim 9, wherein the pipe system comprises:
a main pipe connected to the common reformer; and
divergence pipes connected to the main pipe and the plurality of fuel cells.

14. The system according to claim 9, wherein the pipe system further comprises a plurality of controlling units which control an amount of hydrogen supplied to each of the plurality of fuel cells.

15. The system according to claim 9, wherein an external power supply line which supplies external power from a power plant connects to each of the converters.

16. The system according to claim 9, further comprising a plurality of supplementary heating units which rapidly heat water stored in the hot water storage tanks.

17. The system according to claim 16, wherein the supplementary heating units each comprise a catalyst burner which generate heat by combusting hydrogen.

18. A system for supplying energy to a plurality of building units, comprising:
a plurality of fuel cells installed in a plurality of building units;
a common reformer, connected to a gas supply pipe which supplies gas to each building unit of the plurality of building units, which generates hydrogen from gas from the gas supply pipe;
a pipe system which supplies hydrogen generated by the common reformer to each fuel cell of the plurality of fuel cells;
a plurality of hot water storage tanks, installed in the plurality of building units, which supply hot water to the plurality of building units, the plurality of fuel cells heating water stored in the plurality of hot water storage tanks;
a plurality of supplementary heating units which heat the water stored in the plurality of hot water storage tanks using at least one of the gas from the gas supply pipe and hydrogen remaining at a fuel cell after a reaction; and
a plurality of converters installed in the plurality of building units, which convert electricity generated by the plurality of fuel cells into electricity supplied to the plurality of building units.

19. The system according to claim 18, wherein gas supplied to the gas supply pipe is liquefied natural gas (LNG).

20. The system according to claim 18, wherein each supplementary heating unit of the plurality of the supplementary heating units comprises a catalyst burner which combusts LNG and hydrogen.

21. The system according to claim 18, further comprising:
a connection pipe which supplies hydrogen remaining at a fuel cell after a reaction from a fuel cell to a supplementary heating unit;
a gas connection pipe which supplies gas from the gas supply pipe to a supplementary heating unit;
a first flow amount controlling valve mounted on the connection pipe; and
a second flow amount controlling valve mounted on the gas connection pipe.

22. The system according to claim 18, wherein an external power supply line which supplies external power from a power plant connects to each converter of the plurality of converters.

23. The system according to claim 18, further comprising a pressure swing absorber (PSA) which enhances a purity of hydrogen generated by the common reformer.

24. The system of claim 17, further comprising a hydrogen storage tank, connected to the pipe system, which stores hydrogen refined by the PSA .
